# EUROPEAN PATENT SPECIFICATION

(11) **EP 2 953 396 B1**
(45) Date of publication and mention of the grant of the patent: **21.10.2020**
(21) Application number: 13875876.8
(22) Date of filing: 14.11.2013
(51) Int. Cl.: H04W 28/02, H04W 36/00, H04W 68/00

(54) **METHOD FOR CONTROLLING SERVICE, MOBILE MANAGEMENT ENTITY AND MOBILE SWITCHING CENTRE**
DIENSTSTEUERUNGSVERFAHREN, MOBILES MANAGEMENTVERFAHREN UND MOBILE VERMITTLUNGSZENTRALE
PROCÉDÉ DE CONTRÔLE DE SERVICE, ENTITÉ DE GESTION DE LA MOBILITÉ, ET CENTRE DE COMMUTATION DU SERVICE MOBILE

(30) Priority: 22.02.2013 CN 201310057676
(43) Date of publication of application: 09.12.2015
(73) Proprietor: Huawei Technologies Co., Ltd., Longgang District Shenzhen, Guangdong 518129 (CN)
(72) Inventor: WANG, Xinyong, Shenzhen Guangdong 518129 (CN); ZHU, Haopeng, Shenzhen Guangdong 518129 (CN); JIANG, Tao, Shenzhen Guangdong 518129 (CN); WU, Xiaobo, Shenzhen Guangdong 518129 (CN); SUN, Xiaoji, Shenzhen Guangdong 518129 (CN); TAN, Wei, Shenzhen Guangdong 518129 (CN)
(74) Representative: Epping - Hermann - Fischer
(86) International application number: PCT/CN2013/087142
(87) International publication number: WO 2014/127649

(56) References cited:
- WO-A1-2010/015203
- CN-A- 101 964 965
- CN-A- 102 177 737
- CN-A- 102 273 296
- CN-A- 102 857 994
- US-A1- 2010 075 698
- US-A1- 2011 110 228
- US-A1- 2011 244 823
- US-A1- 2011 305 192
- US-A1- 2012 218 889
- US-A1- 2013 016 608
- NOKIA SIEMENS NETWORKS: "Detach with voice support indication", 3GPP DRAFT; S2-122260_DETACH WITH VOIP INDICATION-DISC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Kyoto, Japan; 20120521 - 20120525, 15 May 2012 (2012-05-15), XP050632767, [retrieved on 2012-05-15]
- NEC: "IMS Voice Support Indication in the GUTI Reallocation", 3GPP DRAFT; S2-096115 IMS VOICE SUPPORT INDICATION IN THE GUTI REALLOCATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Elbonia; 20091021, 21 October 2009 (2009-10-21), XP050396209, [retrieved on 2009-10-16]
- Miikka Poikselkä ET AL: "VoLTE Functionality" In: "Voice Over LTE", 3 February 2012 (2012-02-03), John Wiley & Sons, Ltd, Chichester, UK, XP055269160, ISBN: 978-1-119-95168-1 pages 47-97, DOI: 10.1002/9781119944935.ch4, * paragraph [4.3.2.3] *

## Description

### TECHNICAL FIELD

Embodiments of the present invention relate to the field of wireless communications technologies, and more specifically, to a service control method, a mobility management entity, and a mobile switching center.

### BACKGROUND

With development of technologies, high bandwidth promised by Long Term Evolution (Long Term Evolution, "LTE" for short) brings a great opportunity for mobile bandwidth growth. Compared with an LTE data service, voice over LTE (Voice Over LTE, "VoLTE" for short) raises a higher requirement on wireless coverage resources of LTE, mainly because VoLTE requires higher quality-of-service (Quality-of-Service, QoS), and has a lower delay tolerance. In addition, VoLTE supports high-definition audio and video encoding and decoding, which means that VoLTE has a higher bandwidth requirement, and bandwidth usage of VoLTE needs to be preferably guaranteed by LTE resources scheduling. For the foregoing reasons, a growth in VoLTE subscriber base means coverage shrinkage of an LTE cell, thereby increasing cell congestion and resulting in phenomena such as call drops or blocked calls.

US 2011/0305192 A1 discloses methods and apparatus for voice domain operation. One example method includes determining that an LTE network is not preferred for voice service provision; storing an identification of the LTE network that is not preferred for voice service provision; and accessing the stored identification of the LTE network that is not preferred for voice service provision.

### SUMMARY

The invention is defined by the independent claims. Advantageous embodiments of the invention are given in the sub-claims. In the following, embodiments not falling within the scope of the claims are to be understood as examples useful for understanding the invention. Embodiments of the present invention provide a service control method, a mobility management entity, so that a user equipment can communicate via a CS domain rather than suffering a voice call failure.

According to a first aspect, an embodiment of the present invention provides a service control method, where the method is executed by a mobility management entity MME, the MME is an MME of a mobile network supporting Internet Protocol IP multimedia subsystem IMS voice over packet-switched PS session IMS Voice Over PS session, and the method includes: determining one or more user equipments; in a scenario of unsolicited circuit switched fallback CSFB offloading, sending a notification message to the one or more user equipments, so as to trigger the one or more user equipments to send a registration request message or a combined registration request message to the MME, and when the registration request message or the combined registration request message is received, sending a registration accept message or a combined registration accept message to the one or more user equipments, where the registration accept message or the combined registration messagecombined registration message indicates to the one or more user equipments that voice over Internet Protocol IP multimedia subsystem IMS VoIMS is unavailable. With reference to the first aspect, in a first possible implementation, the registration request message is an attach message or a tracking area update TAU message; the registration accept message is an attach accept message or a TAU accept message; the combined registration request message is a combined attach message or a combined TAU message; and the combined registration accept message is a combined attach accept message or a combined TAU accept message.

With reference to the first aspect, in a second possible implementation, before the determining one or more user equipments, the method further includes:
determining that the MME is in network congestion.

With reference to the second possible implementation, in a third possible implementation, the determining that the MME is in network congestion includes: determining that the MME is in network congestion according to cell congestion information sent by a network side device, where the cell congestion information includes a cell congestion level and cell information; or when congestion statistics information reaches a preset threshold, determining that the MME is in network congestion, where the congestion statistics information includes signaling-plane congestion statistics information and a quality-of-service class identifier QCI bearer setup success rate that are based on a Long Term Evolution LTE cell.

With reference to the first aspect, in a fourth possible implementation, the determining one or more user equipments includes: determining the one or more user equipments according to user equipment information sent by the network side device, where the user equipment information includes one or multiple of the following: location information of a user equipment served by the network side device, state information of the user equipment served by the network side device, and service information of the user equipment served by the network side device.

With reference to the second possible implementation, in a fifth possible implementation, the sending a notification message to the one or more user equipments, so as to trigger the one or more user equipments to send a registration request message or a combined registration request message to the MME, and when the registration request message or the combined registration request message is received, sending a registration accept message or a combined registration accept message to the one or more user equipments includes: sending the notification message to the one or more user equipments, where the notification message is an international mobile subscriber identity IMSI detach message, so as to trigger the one or more user equipments to send the combined registration request message to the MME, where the combined registration request message is the combined TAU message; and when the combined TAU message is received, setting an IMS voice over PS session supported indication IMS Voice over PS session supported Indication in the combined registration accept message to false, to indicate that VoIMS is unavailable, and sending the combined registration accept message to the one or more user equipments, where the combined registration accept message is the combined TAU accept message.

With reference to the second possible implementation, in a sixth possible implementation, the sending a notification message to the one or more user equipments, so as to trigger the one or more user equipments to send a registration request message or a combined registration request message to the MME, and when the registration request message or the combined registration request message is received, sending a registration accept message or a combined registration accept message to the one or more user equipments includes: sending the notification message to the one or more user equipments, where the notification message is a globally unique temporary identity GUTI reallocation message carrying an invalid TAI list, so as to trigger the one or more user equipments to send the registration request message to the MME, where the registration request message is the TAU message; and when the TAU message is received, setting an IMS voice over PS session supported indication IMS Voice over PS session supported Indication in the registration accept message to false, to indicate that VoIMS is unavailable, and sending the registration accept message to the one or more user equipments, where the registration accept message is the TAU accept message.

With reference to the second possible implementation, in a seventh possible implementation, the sending a notification message to the one or more user equipments, so as to trigger the one or more user equipments to send a registration request message or a combined registration request message to the MME, and when the registration request message or the combined registration request message is received, sending a registration accept message or a combined registration accept message to the one or more user equipments includes: sending the notification message to the one or more user equipments, where the notification message is an evolved packet system EPS detach message, so as to trigger the one or more user equipments to send the registration request message to the MME, where the registration request message is the attach message; and when the attach message is received, setting an IMS voice over PS session supported indication IMS Voice over PS session supported Indication in the registration accept message to false, to indicate that VoIMS is unavailable, and sending the registration accept message to the one or more user equipments, where the registration accept message is the attach registration accept message.

With reference to the first aspect or any one of the foregoing possible implementations of the first aspect, in an eighth possible implementation, when the offload indication is sent to the user equipments, the method further includes: determining that the one or more user equipments are user equipments that have been CSFB-offloaded; and in a combined location update procedure via an SGs interface, sending a switch indication to a mobile switching center MSC, where the switch indication is used to notify the MSC that the one or more user equipments are user equipments that have been CSFB-offloaded, so that the MSC manages and controls the one or more user equipments.

With reference to the first aspect or any one of the foregoing possible implementations of the first aspect, in a ninth possible implementation, the method further includes: during the determining one or more user equipments, marking the one or more user equipments, so that the one or more user equipments are restored to VoLTE user equipments.

According to a second aspect, an embodiment of the present invention provides a mobility management entity MME, where the MME is an MME of a mobile network supporting Internet Protocol IP multimedia subsystem IMS voice over packet-switched PS session IMS Voice Over PS session, and the MME includes: a control unit, configured to determine one or more user equipments; a receiving unit, configured to receive a registration request message or a combined registration request message sent by the one or more user equipments, where the control unit is further configured to determine a registration accept message or a combined registration accept message, where the registration accept message or the multiple combined registration messages are used to indicate to the one or more user equipments that voice over Internet Protocol IP multimedia subsystem IMS VoIMS is unavailable; and a sending unit, configured to send the registration accept message or the combined registration accept message to the one or more user equipments.

The sending unit is further configured to send a notification message to the one or more user equipments, so as to trigger the one or more user equipments to send the registration request message or the combined registration request message to the MME.

With reference to the second aspect, in a third possible implementation,
the control unit is further configured to determine that the MME is in network congestion.

With reference to the third possible implementation, in a fourth possible implementation,
the receiving unit is further configured to receive a cell congestion information sent by a network side device, where the cell congestion information includes a cell congestion level and cell information; and
the control unit is specifically configured to determine that the MME is in network congestion according to the cell congestion information.

With reference to the third possible implementation, in a fifth possible implementation,
the control unit is further configured to collect congestion statistics information, where the congestion statistics information includes signaling-plane congestion statistics information and a quality-of-service class identifier QCI bearer setup success rate that are based on a Long Term Evolution LTE cell; arid
the control unit is specifically configured to determine that the MME is in network congestion according to the congestion statistics information.

With reference to the second aspect or the first possible implementation, in a sixth possible implementation,
the receiving unit is further configured to receive user equipment information sent by a network side device, where the user equipment information includes one or multiple of the following: location information of a user equipment served by the network side device, state information of the user equipment served by the network side device, and service information of the user equipment served by the network side device; and
the control unit is specifically configured to determine the one or more user equipments according to the user equipment information.

With reference to the second possible implementation, in a seventh possible implementation,
the sending unit is specifically configured to send the notification message to the one or more user equipments, where the notification message is an international mobile subscriber identity IMSI detach message, so as to trigger the one or more user equipments to send the combined registration request message to the MME, where the combined registration request message is a combined tracking area update TAU message;
the receiving unit is specifically configured to receiveonfigured to receive the combined TAU message;
the control unit is specifically configured to set an IMS voice over PS session supported indication IMS Voice over PS session supported Indication in the combined registration accept message to false, to indicate that VoIMS is unavailable, where the combined registration accept message is a combined TAU accept message; and
the sending unit is specifically configured to send the combined TAU accept message to the one or more user equipments.

With reference to the second possible implementation, in an eighth possible implementation,
the sending unit is specifically configured to send the notification message to the one or more user equipments, where the notification message is a globally unique temporary identity GUTI reallocation message carrying an invalid TAI list, so as to trigger the one or more user equipments to send the registration request message to the MME, where the registration request message is a TAU message;
the receiving unit is specifically configured to receive the TAU message sent by the one or more user equipments;
the control unit is specifically configured to set an IMS voice over PS session supported indication IMS Voice over PS session supported Indication in the registration accept message to false, to indicate that VoIMS is unavailable, where the registration accept message is a TAU accept message; and
the sending unit is specifically configured to send the TAU accept message to the one or more user equipments.

With reference to the second possible implementation, in a ninth possible implementation,
the sending unit is specifically configured to send the notification message to the one or more user equipments, where the notification message is an evolved packet system EPS detach message, so as to trigger the one or more user equipments to send the registration request message to the MME, where the registration request message is an attach message;
the receiving unit is specifically configured to receive the attach message sent by the one or more user equipments;
the control unit is specifically configured to set an IMS voice over PS session supported indication IMS Voice over PS session supported Indication in the registration accept message to false, to indicate that VoIMS is unavailable, where the registration accept message is an attach accept message; and
the sending unit is specifically configured to send the attach accept message to the one or more user equipments.

With reference to the second aspect or any one of the foregoing possible implementations, in a tenth possible implementation,
the control unit is further configured to determine that the one or more user equipments are user equipments for which circuit switched fallback CSFB offloading has been performed; and
the sending unit is further configured to send, in a combined location update procedure via an SGs interface, a switch indication to a mobile switching center MSC, where the switch indication is used to notify the MSC that the one or more user equipments are user equipments that have been CSFB-offloaded.

With reference to the second aspect or any one of the foregoing possible implementations, in an eleventh possible implementation,
the control unit is further configured to mark the one or more user equipments.

When QoS of an LTE cell cannot be guaranteed, the MME provided in the present invention can perform CSFB offloading by using a registration accept message or a combined registration accept message to indicate to a user equipment that VoIMS is unavailable, so that the user equipment can communicate via a CS domain rather than suffering a voice call failure.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a service control method according to an embodiment of the present invention;
FIG. 2 is a schematic flowchart of a service control method according to an embodiment of the present invention;
FIG. 3 is a schematic flowchart of a service control method according to an embodiment of the present invention;
FIG. 4 is a schematic flowchart of a service control method according to an embodiment of the present invention;
FIG. 5 is a schematic flowchart of a service control method according to an embodiment of the present invention;
FIG. 6 is a schematic flowchart of a service control method according to an embodiment of the present invention;
FIG. 7 is a structural block diagram of an MME according to an embodiment of the invention;
FIG. 8 is a structural block diagram of an MSC according to an embodiment of the present invention;
FIG. 9 is a structural block diagram of an MME according to an embodiment of the present invention; and
FIG. 10 is a structural block diagram of an MSC according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, such as: Global System for Mobile Communications (Global System for Mobile Communications, "GSM" for short), a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, LTE time division duplex (Time Division Duplex, "TDD" for short), and Universal Mobile Telecommunications System (Universal Mobile Telecommunication System, "UMTS" for short). A user equipment (User Equipment, UE) may also be referred to as a mobile terminal (Mobile Terminal, MT), a mobile user equipment, and the like, and may communicate with one or more core networks through a radio access network (for example, Radio Access Network, RAN). The user equipment may be a mobile terminal, such as a mobile phone (also referred to as a "cellular" phone) or a computer with a mobile terminal. For example, the user equipment may be a portable, pocket-sized, handheld, computer built-in, or vehicle-mounted mobile apparatus.

A base station may be a base station (Base Transceiver Station, BTS) in GSM or CDMA, may also be a base station (NodeB) in WCDMA, and may further be an eNB or e-NodeB in LTE, which is not limited in the present invention.

A Mobility Management Entity (Mobility Management Entity, MME) is an MME capable of Internet Protocol (Internet Protocol, IP) multimedia subsystem (IP Multimedia Subsystem, IMS) voice over packet-switched (Packet-Switched, PS) session (IMS Voice Over PS Session).

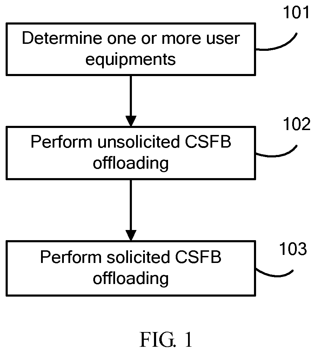

FIG. 1 is a schematic flowchart of a service control method according to an embodiment of the present invention, and the method shown in FIG. 1 is executed by an MME.

101: Determine one or more user equipments.

After step 101 is executed, step 102 may be executed to perform unsolicited circuit switched fallback (Circuit Switched Fallback, CSFB) unsolicited offloading, or step 103 may be executed to perform solicited circuit switched fallback (Circuit Switched Fallback, CSFB) solicited offloading.

102: In a scenario of unsolicited CSFB unsolicited offloading, send a notification message to the one or more user equipments, so as to trigger the one or more user equipments to send a registration request message or a combined registration request message to the MME, and when the registration request message or the combined registration request message is received, send a registration accept message or a combined registration accept message to the one or more user equipments, where the registration accept message or the combined registration message indicates to the one or more user equipments that voice over Internet Protocol IP multimedia subsystem IMS VoIMS is unavailable.

103: In a scenario of solicited CSFB solicited offloading, when a registration request message or a combined registration request message sent by the one or more user equipments is received, send a registration accept message or a combined registration accept message to the one or more user equipments, where the registration accept message or the combined registration accept message indicates to the one or more user equipments that VoIMS is unavailable.

According to the method shown in FIG. 1, when QoS of an LTE cell cannot be guaranteed, an MME can perform CSFB offloading by using a registration accept message or a combined registration accept message to indicate to a user equipment that VoIMS is unavailable, so that the user equipment can resort to a circuit switched (Circuit Switched, CS) domain for communication rather than suffering a voice call failure.

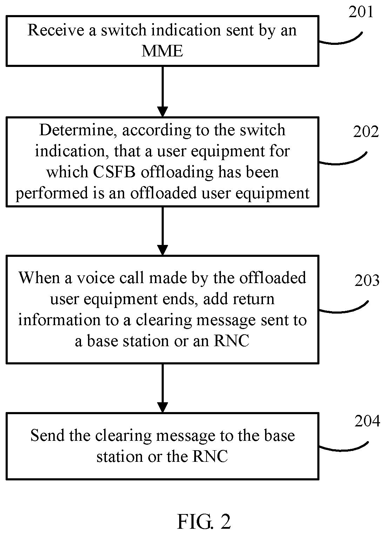

FIG. 2 is a schematic flowchart of a service control method according to an embodiment of the present invention, and the method shown in FIG. 2 is executed by a mobile switching center (Mobile Switching Center, MSC).

201: Receive an offload indication sent by an MME, where the offload indication is used to notify that one or more user equipments are user equipments that have been CSFB-offloaded. 202: Determine, according to the offload indication, that the one or more CSFB-offloaded user equipments are offloaded user equipments.

203: When a voice call made by the offloaded user equipment ends, add return information to a clearing message sent to a base station or an RNC, so that the base station or the RNC performs a fast-return procedure, where the return information includes fourth generation (4^{th} generation, 4G) public land mobile network (Public Land Mobile Network, PLMN) information and a CSFB indication.

204: Send the clearing message to the base station or the RNC.

According to the method shown in FIG. 2, an MSC can learn a user equipment that has been CSFB-offloaded and add return information to a clearing message when a call ends, to trigger a fast-return procedure at a base station or an RNC. In this way, the base station or the RNC can fast switch the user equipment to an LTE network.

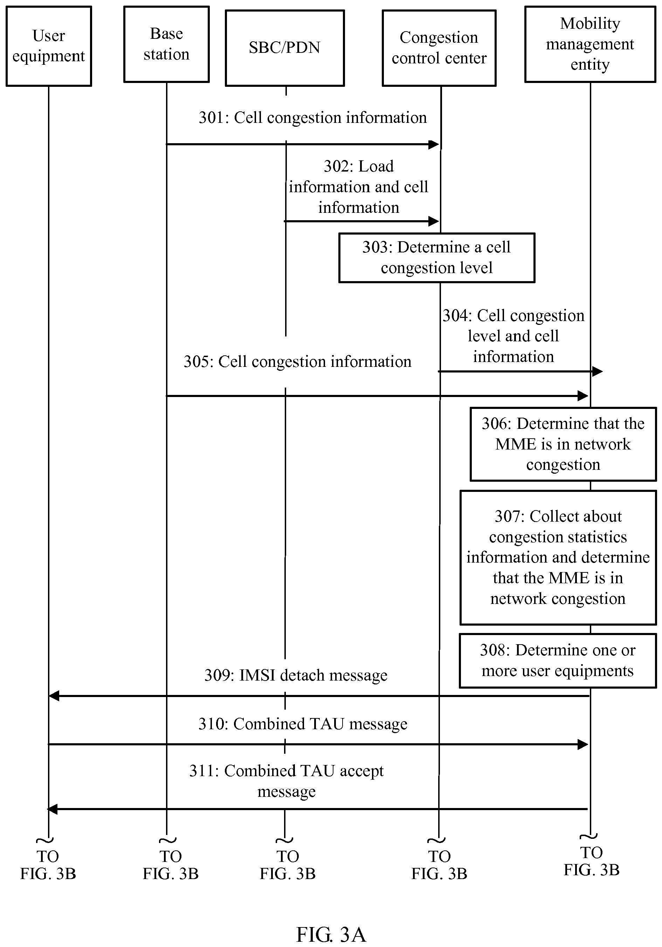

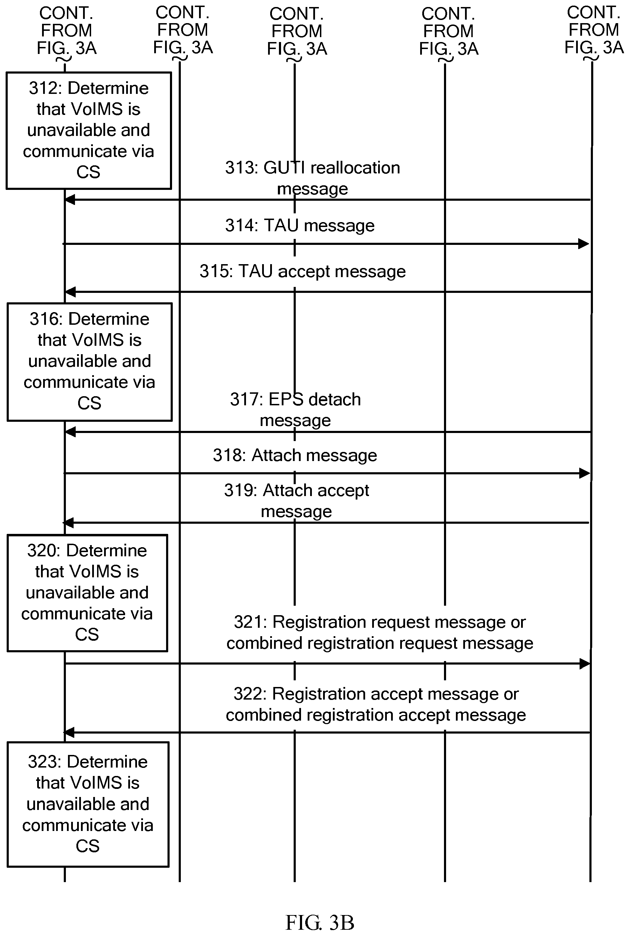

FIG. 3A and FIG. 3B is a schematic flowchart of a service control method according to an embodiment of the present invention.

Optionally, in an embodiment, step 301 may be executed.

301: A congestion control center receives cell congestion information sent by a base station, where the cell congestion information includes a cell congestion level and cell information.

Specifically, the base station may periodically detect load information of a cell, where the load information includes information such as an air-interface physical resource block (Physical Resource Block, PRB) utilization rate, a VoLTE call setup success rate, and an IP QoS level of VoLTE bearer. According to a result of the detection, a cell congestion level of the cell is determined. The base station sends the cell congestion information, which carries the cell congestion level and the cell information, to an MME, where the cell information may be the E-UTRAN cell global identifier (E-UTRAN Cell Global Identifier, eCGI).

Optionally, in an embodiment, step 302 and step 303 may be executed.

302: The congestion control center receives load information and cell information of an LTE cell from a session boarder controller (Session Boarder Controller, SBC) or a packet data network gateway (PDN Gateway, P-GW), where the load information includes information such as a PRB utilization rate, a VoLTE call setup success rate, and an IP QoS level of VoLTE bearer, and the cell information may be an eCGI.

Specifically, the SBC may collect the load information by means of call sampling. The P-GW may perform DPI to reassemble application layer information and then derive the load information from the application layer information.

303: The congestion control center determines a cell congestion level of the LTE cell according to the load information of the LTE cell.

After step 301 is executed or after step 302 and step 303 are executed, step 304 may be executed. 304: The congestion control center sends the cell congestion level and the cell information to an MME.

Optionally, the congestion control center may send the cell congestion level and the cell information to the MME in a form of congested-cell list.

Optionally, in an embodiment, step 305 may be executed.

305: The MME receives cell congestion information sent by the base station, where the cell congestion information includes a cell congestion level and cell information.

Specifically, the base station may periodically detect load information of a cell, where the load information includes information such as an air-interface physical resource block (Physical Resource Block, PRB) utilization rate, a VoLTE call setup success rate, and an IP QoS level of VoLTE bearer. According to a result of the detection, the cell congestion level of the cell is determined. The base station sends the cell congestion information, which carries the cell congestion level and the cell information, to the MME, where the cell information may be an eCGI.

Optionally, in an embodiment, after step 304 is executed or after step 305 is executed, step 306 may be executed.

306: The MME determines, according to the cell congestion level, that the MME is in network congestion.

Optionally, in an embodiment, step 307 may be executed.

307: The MME collects congestion statistics information, and when the congestion statistics information reaches a preset threshold, determines that the MME is in network congestion, where the congestion statistics information includes signaling-plane congestion statistics of the LTE cell and a quality-of-service class identifier QCI bearer setup success rate of the LTE cell.

It should be noted that, step 301 to step 307 are optional steps, and one or more steps among step 301 to step 307 may or may not be executed.

Optionally, by executing one or more steps among step 301 to step 307, it may be ascertained that a CSFB offloading procedure needs to be performed when the MME is in network congestion. Alternatively, the CSFB offloading procedure may be triggered in another manner, for example, the CSFB offloading procedure may be triggered according to a request received from a user equipment or another network side device (such as a base station).

308: The MME determines one or more user equipments.

Specifically, the MME may determine the one or more user equipments according to user equipment information, where the user equipment information may be sent by a network side device, and the user equipment information includes information such as: priority, location information, camped cell, current service state, and capability of a user equipment served by the network side device.

When the one or more user equipments are determined by the MME, the MME may execute an unsolicited CSFB offloading procedure. Specifically, the MME sends a notification message to the one or more user equipments, so as to trigger the one or more user equipments to send a registration request message or a combined registration request message to the MME, and after the registration request message or the combined registration request message is received, the MME sends a registration accept message or a combined registration accept message to the one or more user equipments, where the registration accept message or the combined registration accept message indicates to the one or more user equipments that VoIMS is unavailable. Optionally, the registration request message may be an attach (attach) message or a tracking area update (Tracking Area Update, TAU) message; the registration accept message may be an attach accept (attach accept) message, or may be a TAU accept (TAU accept) message; the combined registration request message is a combined attach (combined attach) message, or may be a combined TAU (combined TAU) message; and the combined registration accept message may be a combined attach accept (combined attach accept) message, or may be a combined TAU accept (combined TAU accept) message.

Specifically, step 309 to step 312 are a first type of unsolicited CSFB offloading procedure, step 313 to step 316 are a second type of unsolicited CSFB offloading procedure, and step 317 to step 320 are a third type of unsolicited CSFB offloading procedure.

When the one or more user equipments are determined by the MME, the MME may further execute a solicited CSFB offloading procedure. Specifically, after a registration request message or a combined registration request message sent by the one or more user equipments is received, the MME sends a registration accept message or a combined registration accept message to the one or more user equipments, where the registration accept message or the combined registration accept message indicates to the one or more user equipments that VoIMS is unavailable. Optionally, the registration request message may be an attach (attach) message or a tracking area update (Tracking Area Update, TAU) message; the registration accept message may be an attach accept (attach accept) message, or may be a TAU accept (TAU accept) message; the combined registration request message is a combined attach (combined attach) message, or may be a combined TAU (combined TAU) message; and the combined registration accept message may be a combined attach accept (combined attach accept) message, or may be a combined TAU accept (combined TAU accept) message.

Specifically, step 321 to step 323 are a solicited CSFB offloading procedure.

In an embodiment, after step 308 is executed, step 309 to step 312 may be executed.

309: The MME sends a notification message to the one or more user equipments, where the notification message is an international mobile subscriber identity (International Mobile Subscriber Identity, IMSI) detach (detach) message, so as to trigger the one or more user equipments to send a combined registration request message to the MME.

310: After the IMSI detach message is received, the one or more user equipments send a combined registration request message to the MME, where the combined registration request message is a combined TAU message.

It can be understood that, after the IMSI detach message is received, any user equipment of the one or more user equipments may send the combined TAU message to the MME.

311: After the combined TAU message sent by the one or more user equipments is received, the MME sets an IMS voice over PS session supported indication (IMS Voice over PS session supported Indication) in a combined registration accept message to false (false), to indicate to the one or more user equipments that VoIMS is unavailable, and sends the combined registration accept message to the one or more user equipments, where the combined registration accept message is a combined TAU accept message.

It can be understood that, after the combined TAU message sent by any user equipment of the one or more user equipments is received, the MME may send, to the user equipment, the combined TAU accept message in which the IMS voice over PS session supported indication (IMS Voice over PS session supported Indication) is set to false.

312: After the combined TAU accept message in which the IMS Voice over PS session supported Indication is set to false is received, the user equipment determines that VoIMS is unavailable and communicates via a circuit switched domain whenever a need for communication arises.

In an embodiment, after step 308 is executed, step 313 to step 316 may be executed.

313: The MME sends a notification message to the one or more user equipments, where the notification message is a globally unique temporary identity (Globally Unique Temporary Identity, GUTI) reallocation message carrying an invalid TAI list, so as to trigger the one or more user equipments to send a registration request message to the MME.

314: After the GUTI reallocation message carrying an invalid TAI list is received, the one or more user equipments send a combined registration request message to the MME, where the combined registration request message is a TAU message.

It can be understood that, after the GUTI reallocation message carrying an invalid TAI list is received, any user equipment of the one or more user equipments may send the TAU message to the MME.

315: After the TAU message sent by the one or more user equipments is received, the MME sets an IMS voice over PS session supported indication (IMS Voice over PS session supported Indication) in a registration accept message to false (false), to indicate to the one or more user equipments that VoIMS is unavailable, and sends the registration accept message to the one or more user equipments, where the registration accept message is a TAU accept message.

It can be understood that, after the TAU message sent by any user equipment of the one or more user equipments is received, the MME may send, to the user equipment, the TAU accept message in which the IMS voice over PS session supported indication (IMS Voice over PS session supported Indication) is set to false.

316: After the TAU accept message in which the IMS Voice over PS session supported Indication is set to false is received, the user equipment determines that VoIMS is unavailable and communicates via a circuit switched domain whenever a need for communication arises.

In an embodiment, after step 308 is executed, step 317 to step 316 may be executed.

317: The MME sends a notification message to the one or more user equipments, where the notification message is an evolved packet system (Evolved Packet System, EPS) detach (detach) message, so as to trigger the one or more user equipments to send a registration request message to the MME.

318: After the EPS detach message is received, the one or more user equipments send a combined registration request message to the MME, where the combined registration request message is an attach message.

It can be understood that, after the EPS detach message is received, any user equipment of the one or more user equipments may send the attach message to the MME.

319: After the attach message sent by the one or more user equipments is received, the MME sets an IMS voice over PS session supported indication (IMS Voice over PS session supported Indication) in a registration accept message to false (false), to indicate to the one or more user equipments that VoIMS is unavailable, and sends the registration accept message to the one or more user equipments, where the registration accept message is an attach accept message.

It can be understood that, after the attach message sent by any user equipment of the one or more user equipments is received, the MME may send, to the user equipment, the attach accept message in which the IMS Voice over PS session supported Indication is set to false.

320: After the attach accept message in which the IMS Voice over PS session supported Indication is set to false is received, the user equipment determines that VoIMS is unavailable and communicates via a circuit switched domain whenever a need for communication arises.

In an embodiment, after step 308 is executed, step 321, step 322, and step 323 may be executed. 321: The one or more user equipments send a registration request message or a combined registration request message to the MME.

322: After the registration request message or the combined registration request message sent by the one or more user equipments is received, the MME sets an IMS voice over PS session supported indication (IMS Voice over PS session supported Indication) in a registration accept message or a combined registration accept message to false (false), to indicate to the one or more user equipments that VoIMS is unavailable, and sends the registration accept message or the combined registration accept message to the one or more user equipments.

Optionally, the registration request message may be a TAU message, or may be an attach message; the combined registration request message may be a combined TAU message, or may be a combined attach message; the registration accept message may be a TAU accept message, or may be an attach accept message; and the combined registration message may be a combined TAU accept message, or may be a combined attach accept message.

It can be understood that, when a registration request message is received by the MME and the registration request message is a TAU message, the MME sends a TAU accept message. Similarly, when a registration request message is received by the MME and the registration request message is an attach message, the MME sends an attach accept message. Similarly, when a combined registration request message is received by the MME and the combined registration request message is a combined TAU message, the MME sends a combined TAU accept message. Similarly, when a combined registration request message is received by the MME and the combined registration request message is a combined attach message, the MME sends a combined attach accept message.

323: After the registration message or the combined registration accept message in which the IMS voice over PS session supported identification (IMS Voice over PS session supported Indication) is set to false is received, the user equipment determines that VoIMS is unavailable and communicates via a circuit switched domain whenever a need for communication arises.

It should be noted that, the solicited offloading procedure from step 321 to step 323 is executed when the one or more user equipments are in idle state.

Optionally, when CSFB offloading is performed, the MME may further mark the one or more user equipments, so that the one or more user equipments can be restored to VoLTE users when VoLTE can be used by the one or more user equipments.

Optionally, when CSFB offloading is performed, the MME may further send an offload indication to a mobile switching center (MSC), where the offload indication is used to notify the MSC that the one or more user equipments are user equipments that have been CSFB-offloaded. Specifically, when a combined location update procedure is initiated on an SGs interface, the MME adds an extended information element as the offload indication to the SGs associated location update (associated location update) message. The MSC records, according to the offload indication, that a current CSFB user is an offloaded user, and adds an indication to a follow-up charging data record for the voice call fallback, so that a tariff policy for VoLTE users is applied to the offloaded user, without adversely affecting communication of the user via the user equipment. The MSC may further preferably use, according to the offload indication, high-speed encoding in the current voice call, to ensure user experience of the user equipment. The MSC may further add, according to the offload indication, an extended information element to a clearing message when the voice call ends, where the extended information element carries fourth generation (4 generation, 4G) public land mobile network (Public Land Mobile Network, PLMN) information and a CSFB indication that are used to revert the CSFB-offloaded user equipment to an LTE network quickly and accurately.

According to the method shown in FIG. 3, in a scenario in which QoS of an LTE cell cannot be guaranteed, an MME can perform CSFB offloading by using a registration accept message or a combined registration accept message to indicate to a user equipment that VoIMS is unavailable, so that the user equipment can communicate via a CS domain rather than suffering a voice call failure.

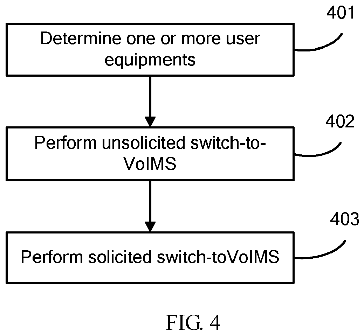

FIG. 4 is a schematic flowchart of a service control method according to an embodiment of the present invention, and the method shown in FIG. 4 is executed by an MME.

401: Determine one or more user equipments.

After step 401 is executed, step 402 may be executed to perform unsolicited switch-to-VoIMS, or step 403 may be executed to perform solicited VoIMS offloading.

402: In a scenario of unsolicited switch-to-VoIMS, send a notification message to the one or more user equipments, so as to trigger the one or more user equipments to send a registration request message or a combined registration request message to the MME, and after the registration request message or the combined registration request message is received, send a registration accept message or a combined registration accept message to the one or more user equipments, where the registration accept message or the combined registration message indicates to the one or more user equipments that voice over Internet Protocol IP multimedia subsystem IMS VoIMS is available.

403: In a scenario of solicited switch-to-VoIMS, when a registration request message or a combined registration request message sent by the one or more user equipments is received, send a registration accept message or a combined registration accept message to the one or more user equipments, where the registration accept message or the combined registration accept message indicates to the one or more user equipments that VoIMS is available.

According to the method shown in FIG. 4, when an LTE cell is able to provide VoIMS, an MME can switch a user equipment in a CS domain to VoIMS by using a registration accept message or a combined registration accept message to indicate to the user equipment that VoIMS is available, so as to improve user experience with the user equipment.

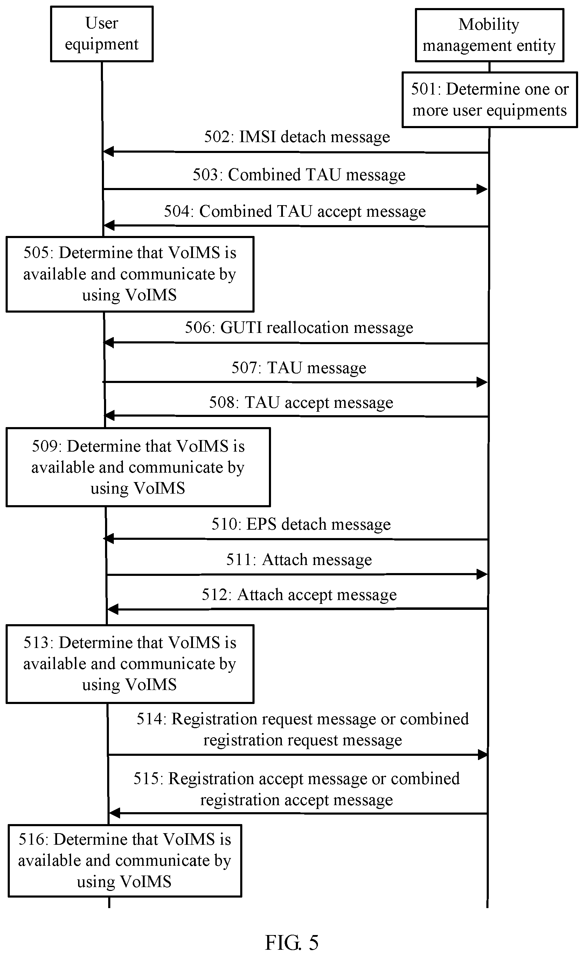

FIG. 5 is a schematic flowchart of a service control method according to an embodiment of the present invention.

501: An MME determines one or more user equipments. Specifically, the MME may determine the one or more user equipments according to information such as priority, location information, camped cell, current service state, and capability of a user equipment.

When the one or more user equipments are determined by the MME, the MME may execute unsolicited switch-to-VoIMS. Specifically, the MME sends a notification message to the one or more user equipments, so as to trigger the one or more user equipments to send a registration request message or a combined registration request message to the MME, and after the registration request message or the combined registration request message is received, the MME sends a registration accept message or a combined registration accept message to the one or more user equipments, where the registration accept message or the combined registration accept message indicates to the one or more user equipments that VoIMS is available. Optionally, the registration request message may be an attach (attach) message or a tracking area update (Tracking Area Update, TAU) message; the registration accept message may be an attach accept (attach accept) message, or may be a TAU accept (TAU accept) message; the combined registration request message is a combined attach (combined attach) message, or may be a combined TAU (combined TAU) message; and the combined registration accept message may be a combined attach accept (combined attach accept) message, or may be a combined TAU accept (combined TAU accept) message.

Specifically, step 502 to step 505 are a first type of unsolicited switch-to-VoIMS, step 506 to 509 are a second type of unsolicited switch-to-VoIMS, and step 510 to step 513 are a third type of unsolicited switch-to-VoIMS.

When the one or more user equipments are determined by the MME, the MME may further execute solicited switch-to-VoIMS. Specifically, after a registration request message or a combined registration request message sent by the one or more user equipments is received, the MME sends a registration accept message or a combined registration accept message to the one or more user equipments, where the registration accept message or the combined registration accept message indicates to the one or more user equipments that VoIMS is available. Optionally, the registration request message may be an attach (attach) message or a tracking area update (Tracking Area Update, TAU) message; the registration accept message may be an attach accept (attach accept) message, or may be a TAU accept (TAU accept) message; the combined registration request message is a combined attach (combined attach) message, or may be a combined TAU (combined TAU) message; and the combined registration accept message may be a combined attach accept (combined attach accept) message, or may be a combined TAU accept (combined TAU accept) message.

Specifically, step 514 to step 516 are the solicited switch-to-VoIMS.

In an embodiment, after step 501 is executed, step 502 to step 505 may be executed.

502: The MME sends a notification message to the one or more user equipments, where the notification message is an IMSI detach message, so as to trigger the one or more user equipments to send a combined registration request message to the MME.

503: After the IMSI detach message is received, the one or more user equipments send the combined registration request message to the MME, where the combined registration request message is a combined TAU message.

It can be understood that, after the IMSI detach message is received, any user equipment of the one or more user equipments may send the combined TAU message to the MME.

504: After the combined TAU message sent by the one or more user equipments is received, the MME sets an IMS voice over PS session supported indication (IMS Voice over PS session supported Indication) in a combined registration accept message to true (true), to indicate to the one or more user equipments that VoIMS is available, and sends the combined registration accept message to the one or more user equipments, where the combined registration accept message is a combined TAU accept message.

It can be understood that, after the combined TAU message sent by any user equipment of the one or more user equipments is received, the MME may send, to the user equipment, the combined TAU accept message in which the IMS Voice over PS session supported Indication is set to true.

505: After the combined TAU accept message in which the IMS Voice over PS session supported Indication is set to true is received, the user equipment determines that VoIMS is available and communicates via VoIMS whenever a need for communication arises.

In an embodiment, after step 501 is executed, step 506 to step 509 may be executed.

506: The MME sends a notification message to the one or more user equipments, where the notification message is a GUTI reallocation message carrying an invalid TAI list, so as to trigger the one or more user equipments to send a registration request message to the MME.

507: After the GUTI reallocation message carrying an invalid TAI list is received, the one or more user equipments send a registration request message to the MME, where the registration request message is a TAU message.

It can be understood that, after the GUTI reallocation message carrying an invalid TAI list is received, any user equipment of the one or more user equipments may send the TAU message to the MME.

508: After the TAU message sent by the one or more user equipments is received, the MME sets an IMS voice over PS session supported indication (IMS Voice over PS session supported Indication) in a registration accept message to true (true), to indicate to the one or more user equipments that VoIMS is available, and sends the registration accept message to the one or more user equipments, where the registration accept message is a TAU accept message.

It can be understood that, after the TAU message sent by any user equipment of the one or more user equipments is received, the MME may send, to the user equipment, the TAU accept message in which the IMS voice over PS session supported indication (IMS Voice over PS session supported Indication) is set to true.

509: After the TAU accept message in which the IMS Voice over PS session supported Indication is set to true is received, the user equipment determines that VoIMS is available and communicates via VoIMS whenever a need for communication arises.

In an embodiment, after step 501 is executed, step 510 to step 513 may be executed.

510: The MME sends a notification message to the one or more user equipments, where the notification message is an EPS detach message, so as to trigger the one or more user equipments to send a registration request message to the MME.

511: After the EPS detach message is received, the one or more user equipments send the registration request message to the MME, where the registration request message is an attach message.

It can be understood that, after the EPS detach message is received, any user equipment of the one or more user equipments may send the attach message to the MME.

512: After the attach message sent by the one or more user equipments is received, the MME sets an IMS voice over PS session supported indication (IMS Voice over PS session supported Indication) in a registration accept message to true (true), to indicate to the one or more user equipments that VoIMS is available, and sends the registration accept message to the one or more user equipments, where the registration accept message is an attach accept message.

It can be understood that, after the attach message sent by any user equipment of the one or more user equipments is received, the MME may send, to the user equipment, the attach accept message in which the IMS voice over PS session supported indication (IMS Voice over PS session supported Indication) is set to true.

513: After the attach accept message in which the IMS voice over PS session supported identification (IMS Voice over PS session supported Indication) is set to true is received, the user equipment determines that VoIMS is available and communicates via VoIMS whenever a need for communication arises.

In an embodiment, after step 501 is executed, step 514, step 515, and step 516 may be executed. 514: The MME receives a registration request message or a combined registration request message sent by the one or more user equipments.

515: After the registration request message or the combined registration request message sent by the one or more user equipments is received, the MME sets an IMS voice over PS session supported indication (IMS Voice over PS session supported Indication) in a registration accept message or a combined registration accept message to true (true), to indicate to the one or more user equipments that VoIMS is available, and sends the registration accept message or the combined registration accept message to the one or more user equipments.

Optionally, the registration request message may be a TAU message, or may be an attach message; the combined registration request message may be a combined TAU message, or may be a combined attach message; the registration accept message may be a TAU accept message, or may be an attach accept message; and the combined registration message may be a combined TAU accept message, or may be a combined attach accept message.

It can be understood that, when a registration request message is received by the MME and the registration request message is a TAU message, the MME sends a TAU accept message. Similarly, when a registration request message is received by the MME and the registration request message is an attach message, the MME sends an attach accept message. Similarly, when a combined registration request message is received by the MME and the combined registration request message is a combined TAU message, the MME sends a combined TAU accept message. Similarly, when a combined registration request message is received by the MME and the combined registration request message is a combined attach message, the MME sends a combined attach accept message.

516: After the registration message or the combined registration accept message in which the IMS voice over PS session supported identification (IMS Voice over PS session supported Indication) is set to true is received, the user equipment determines that VoIMS is available and communicates via VoIMS whenever a need for communication arises.

According to the method shown in FIG. 5, when an LTE cell is able to provide VoIMS, an MME can switch a user equipment in a CS domain to VoIMS by using a registration accept message or a combined registration accept message to indicate to the user equipment that VoIMS is available, so as to improve user experience with the user equipment.

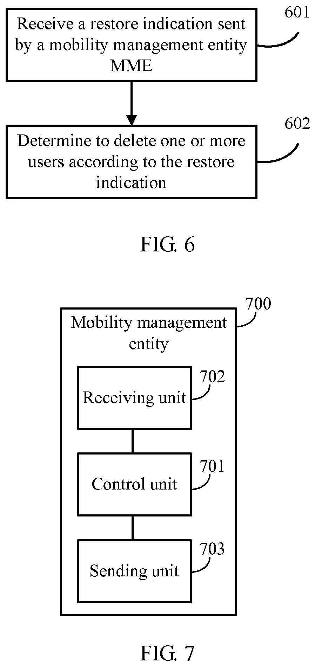

FIG. 6 is a schematic flowchart of a service control method according to an embodiment of the present invention, and the method is executed by a mobile switching center MSC. The method includes:
601: Receive a restore indication sent by a mobility management entity MME.

602: Determine to delete one or more users (User) according to the restore indication, where the one or more users are users who have been CSFB-offloaded.

Optionally, the restore indication is an international mobile subscriber identity IMSI detach message.

Optionally, the CSFB-offloaded user equipment may be a user equipment that is CSFB-offloaded according to the method shown in FIG. 1 to FIG. 3.

Optionally, the MSC may determine, according to a marker made by the MME when CSFB offloading is performed, a user that has been CSFB-offloaded.

By practicing the method provided in FIG. 6, an MSC can delete, according to a restore indication from an MME, a CSFB-offloaded user in a timely manner.

FIG. 7 is a structural block diagram of an MME according to an embodiment of the present invention. The MME 700 shown in FIG. 7 may execute each step executed by the MME in FIG. 1 or FIG. 3. As shown in FIG. 7, the MME 700 includes: a control unit 701, a receiving unit 702, and a sending unit 703.

The control unit 701 is configured to determine one or more user equipments.

The receiving unit 702 is configured to receive a registration request message or a combined registration request message sent by the one or more user equipments.

The control unit 701 is further configured to determine a registration accept message or a combined registration accept message, where the registration accept message or the multiple combined registration messages are used to indicate to the one or more user equipments that VoIMS is unavailable.

The sending unit 703 is configured to send the registration accept message or the combined registration accept message to the one or more user equipments.

According to the MME 700 shown in FIG. 7, when QoS of an LTE cell cannot be guaranteed, the MME 700 can perform CSFB offloading by using a registration accept message or a combined registration accept message to indicate to a user equipment that VoIMS is unavailable, so that the user equipment can communicate via a CS domain rather than suffering a voice call failure. Optionally, the sending unit 703 is further configured to send a notification message to the one or more user equipments, so as to trigger the one or more user equipments to send the registration request message or the combined registration request message to the MME.

Optionally, in an embodiment, the sending unit 703 is specifically configured to send the notification message to the one or more user equipments, where the notification message is an IMSI detach message, so as to trigger the one or more user equipments to send the combined registration request message to the MME, where the combined registration request message is a combined tracking area update TAU message. The receiving unit 702 is specifically configured to receive the combined TAU message. The control unit 701 is specifically configured to set an IMS voice over PS session supported indication (IMS Voice over PS session supported Indication) in the combined registration accept message to false, to indicate that VoIMS is unavailable, where the combined registration accept message is a combined TAU accept message. The sending unit 703 is specifically configured to send the combined TAU accept message to the one or more user equipments.

Optionally, in an embodiment, the sending unit 703 is specifically configured to send the notification message to the one or more user equipments, where the notification message is a GUTI reallocation message carrying an invalid TAI list, so as to trigger the one or more user equipments to send the registration request message to the MME, where the registration request message is a TAU message. The receiving unit 702 is specifically configured to receive the TAU message sent by the one or more user equipments. The control unit 701 is specifically configured to set an IMS voice over PS session supported indication (IMS Voice over PS session supported Indication) in the registration accept message to false, to indicate that VoIMS is unavailable, where the registration accept message is a TAU accept message. The sending unit 703 is specifically configured to send the TAU accept message to the one or more user equipments.

Optionally, in an embodiment, the sending unit 703 is specifically configured to send the notification message to the one or more user equipments, where the notification message is an EPS detach message, so as to trigger the one or more user equipments to send the registration request message to the MME, where the registration request message is an attach message. The receiving unit 702 is specifically configured to receive the attach message sent by the one or more user equipments. The control unit 701 is specifically configured to set an IMS voice over PS session supported indication (IMS Voice over PS session supported Indication) in the registration accept message to false, to indicate that VoIMS is unavailable, where the registration accept message is an attach accept message. The sending unit 703 is specifically configured to send the attach accept message to the one or more user equipments.

Optionally, the control unit 701 is further configured to determine that the MME is in network congestion.

Optionally, in an embodiment, the receiving unit 702 is further configured to receive a cell congestion information sent by a network side device, where the cell congestion information includes a cell congestion level and cell information. The control unit 701 is specifically configured to determine that the MME is in network congestion according to the cell congestion information.

Optionally, in an embodiment, the control unit 701 is further configured to collect congestion statistics information, where the congestion statistics information includes signaling-plane congestion statistics information of an LTE cell and a QCI bearer setup success rate of an LTE cell. The control unit 701 is specifically configured to determine that the MME is in network congestion according to the congestion statistics information.

Optionally, the receiving unit 702 is further configured to receive user equipment information sent by a network side device, where the user equipment information includes one or multiple of the following: location information, state information, and service information of a user equipment served by the network side device. The control unit 701 is specifically configured to determine the one or more user equipments according to the user equipment information. Optionally, the control unit 701 is further configured to determine that the one or more user equipments are user equipments that have been CSFB-offloaded. The sending unit 703 is further configured to send, in a combined location update procedure via an SGs interface, an offload indication to an MSC, where the offload indication is used to notify the MSC that the one or more user equipments are user equipments that have been CSFB-offloaded.

Optionally, the control unit 701 is further configured to mark the one or more user equipments.

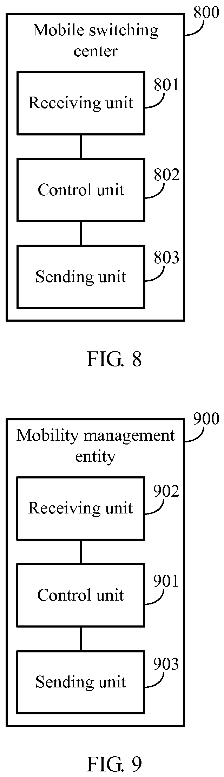

FIG. 8 is a structural block diagram of an MSC according to an embodiment of the present invention. The MSC 800 shown in FIG. 8 may execute each step executed by the user equipment in FIG. 2 or FIG. 3. As shown in FIG. 8, the MSC 800 includes: a receiving unit 801, a control unit 802, and a sending unit 803.

The receiving unit 801 is configured to receive an offload indication sent by a mobility management entity MME.

The control unit 802 is configured to determine, according to the offload indication, that a user equipment that has been CSFB-offloaded is an offloaded user equipment.

The control unit 802 is further configured to add return information to a clearing message, where the return information includes 4G PLMN information and a CSFB indication.

The sending unit 803 is configured to send the clearing message to a base station or an RNC.

According to the MSC 800 shown in FIG. 8, the MSC 800 can learn a CSFB-offloaded user equipment and add return information to a clearing message when the call ends, so as to trigger a fast-return procedure at a base station or an RNC. In this way, the base station or the RNC can revert the user equipment to an LTE network quickly.

Optionally, the control unit 802 is further configured to add a tariff indication to a charging data record for the voice call fallback of the offloaded user equipment, where the tariff indication is used to indicate that a tariff policy for voice over Long Term Evolution VoLTE user equipments is applied to the offloaded user equipment.

Optionally, the control unit 802 is further configured to determine, when the offloaded user equipment makes a voice call, that high-speed encoding and decoding is preferably used.

FIG. 9 is a structural block diagram of an MME according to an embodiment of the present invention. The MME 900 shown in FIG. 9 may execute each step executed by the MME in FIG. 1 or FIG. 3. As shown in FIG. 9, the MME 900 includes: a control unit 901, a receiving unit 902, and a sending unit 903.

The control unit 901 is configured to determine one or more user equipments.

The receiving unit 902 is configured to receive a registration request message or a combined registration request message sent by the one or more user equipments.

The control unit 901 is further configured to determine a registration accept message or a combined registration accept message, where the registration accept message or the multiple combined registration messages are used to indicate to the one or more user equipments that voice over Internet Protocol IP multimedia subsystem IMS VoIMS is available.

The sending unit 903 is configured to send the registration accept message or the combined registration accept message to the one or more user equipments.

According to the MME 900 shown in FIG. 9, when an LTE cell is able to provide VoIMS, the MME 900 can switch a user equipment in a CS domain to VoIMS by using a registration accept message or a combined registration accept message to indicate to the user equipment that VoIMS is available, so as to improve user experience with the user equipment.

Optionally, the sending unit 903 is further configured to send a notification message to the one or more user equipments, so as to trigger the one or more user equipments to send the registration request message or the combined registration request message to the MME.

Optionally, in an embodiment, the sending unit 903 is specifically configured to send the notification message to the one or more user equipments, where the notification message is an IMSI detach message, so as to trigger the one or more user equipments to send the combined registration request message to the MME, where the combined registration request message is a combined TAU message. The receiving unit 902 is specifically configured to receivereceive the combined TAU message. The control unit 901 is specifically configured to set an IMS voice over PS session supported indication (IMS Voice over PS session supported Indication) in the combined registration accept message to true, to indicate that VoIMS is available, where the combined registration accept message is a combined TAU accept message. The sending unit 903 is specifically configured to send the combined TAU accept message to the one or more user equipments.

Optionally, in an embodiment, the sending unit 903 is specifically configured to send the notification message to the one or more user equipments, where the notification message is a GUTI reallocation message carrying an invalid TAI list, so as to trigger the one or more user equipments to send the registration request message to the MME, where the registration request message is a TAU message. The receiving unit 902 is specifically configured to receive the TAU message sent by the one or more user equipments. The control unit 901 is specifically configured to set an IMS voice over PS session supported indication (IMS Voice over PS session supported Indication) in the registration accept message to true, to indicate that VoIMS is available, where the registration accept message is a TAU accept message. The sending unit 903 is specifically configured to send the TAU accept message to the one or more user equipments.

Optionally, in an embodiment, the sending unit 903 is specifically configured to send the notification message to the one or more user equipments, where the notification message is an EPS detach message, so as to trigger the one or more user equipments to send the registration request message to the MME, where the registration request message is an attach message. The receiving unit 902 is specifically configured to receive the attach message sent by the one or more user equipments. The control unit 901 is specifically configured to set an IMS voice over PS session supported indication (IMS Voice over PS session supported Indication) in the registration accept message to true, to indicate that VoIMS is available, where the registration accept message is an attach accept message. The sending unit 903 is specifically configured to send the attach accept message to the one or more user equipments.

Optionally, in an embodiment, the sending unit 903 is further configured to send an IMSI detach message to an MSC, where the IMSI detach message is used to notify the MSC to delete the one or more user equipments.

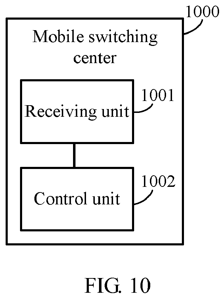

FIG. 10 is a structural block diagram of an MSC according to an embodiment of the present invention. The MSC 1000 shown in FIG. 10 may execute each step executed by the MSC in FIG. 6, and the MSC 1000 includes: a receiving unit 1001 and a control unit 1002.

The receiving unit 1001 is configured to receive a restore indication sent by a mobility management entity MME.

The control unit 1002 is configured to determine and delete one or more users according to the restore indication, where the one or more users are users who have been CSFB-offloaded. According to the method provided in the embodiments of present invention, an MSC can delete, according to a restore indication from an MME, a CSFB-offloaded user in a timely manner.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium and includes several instructions for instructing a computer device (which may be a personal computer, a server, or a network device) or a processor to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A service control method, wherein the method is executed by a mobility management entity MME, the MME is an MME of a mobile network supporting Internet Protocol IP multimedia subsystem IMS voice over packet-switched PS session IMS Voice Over PS session, and the method comprises:
Determining, by the MME, based on received cell congestion information that a cell of the mobile network is congested, wherein the determining, by the MME based on received information that a cell of the mobile network is congested triggers sending a notification message;
determining one or more user equipments in the network according to user equipment information, where the user equipment information is sent by a network side device, and the user equipment information includes priority and/or location information and/or camped cell and/or current service state and/or capability of a user equipment;
in a scenario of unsolicited circuit switched fallback CSFB offloading, when the one or more user equipments are determined by the MME, the MME executes an unsolicited CSFB offloading procedure by sending a notification message to the one or more user equipments, so as to trigger the one or more user equipments to send a registration request message or a combined registration request message to the MME, and when the registration request message or the combined registration request message is received, sending a registration accept message or a combined registration accept message to the one or more user equipments, wherein the registration accept message or the combined registration accept message indicates to the one or more user equipments that voice over Internet Protocol IP multimedia subsystem IMS VoIMS is unavailable, wherein
the registration request message is an attach message or a tracking area update TAU message;
the registration accept message is an attach accept message or a TAU accept message;
the combined registration request message is a combined attach message or a combined TAU message; and
the combined registration accept message is a combined attach accept message or a combined TAU accept message and wherein the sending a notification message to the one or more user equipments, so as to trigger the one or more user equipments to send a registration request message or a combined registration request message to the MME, and when the registration request message or the combined registration request message is received, sending a registration accept message or a combined registration accept message to the one or more user equipments comprises:
sending the notification message to the one or more user equipments, wherein the notification message is an international mobile subscriber identity IMSI detach message, so as to trigger the one or more user equipments to send the combined registration request message to the MME, wherein the combined registration request message is the combined TAU message; and
when the combined TAU message is received, setting an IMS voice over PS session supported indication IMS Voice over PS session supported Indication in the combined registration accept message to false, to indicate that VoIMS is unavailable, and sending the combined registration accept message to the one or more user equipments, wherein the combined registration accept message is the combined TAU accept message
or wherein
the sending a notification message to the one or more user equipments, so as to trigger the one or more user equipments to send a registration request message or a combined registration request message to the MME, and when the registration request message or the combined registration request message is received, sending a registration accept message or a combined registration accept message to the one or more user equipments comprises:
sending the notification message to the one or more user equipments, wherein the notification message is a globally unique temporary identity GUTI reallocation message carrying an invalid TAI list, so as to trigger the one or more user equipments to send the registration request message to the MME, wherein the registration request message is the TAU message; and
when the TAU message is received, setting an IMS voice over PS session supported indication IMS Voice over PS session supported Indication in the registration accept message to false, to indicate that VoIMS is unavailable, and sending the registration accept message to the one or more user equipments , wherein the registration accept message is the TAU accept message
or wherein
the sending a notification message to the one or more user equipments, so as to trigger the one or more user equipments to send a registration request message or a combined registration request message to the MME, and when the registration request message or the combined registration request message is received, sending a registration accept message or a combined registration accept message to the one or more user equipments comprises:
sending the notification message to the one or more user equipments, wherein the notification message is an evolved packet system EPS detach message, so as to trigger the one or more user equipments to send the registration request message to the MME, wherein the registration request message is the attach message; and
when the attach message is received, setting an IMS voice over PS session supported indication IMS Voice over PS session supported Indication in the registration accept message to false, to indicate that VoIMS is unavailable, and sending the registration accept message to the one or more user equipments, wherein the registration accept message is the attach registration accept message.

2. The method according to claim 1, wherein the determining one or more user equipments comprises:
determining the one or more user equipments according to user equipment information sent by a network side device, wherein the user equipment information comprises one or multiple of the following: location information of a user equipment served by the network side device, state information of the user equipment served by the network side device, and service information of the user equipment served by the network side device.

3. The method according to claim 1, wherein the determining, by the MME based on received information, that a cell of the mobile network is congested comprises:
determining based on received information that a cell of the mobile network is congested, wherein the cell congestion information comprises a cell congestion level and cell information.

4. A mobility management entity MME, wherein the MME is an MME of a mobile network supporting Internet Protocol IP multimedia subsystem IMS voice over packet-switched PS session IMS Voice Over PS session, and the MME is configured to execute the method steps according to any one of claims 1 to 3.

## Patentansprüche

1. Dienststeuerverfahren, wobei das Verfahren durch eine Mobilitätsmanagementeinheit, MME, ausgeführt wird, die MME eine MME eines Mobilfunknetzes ist, die im Multimediauntersystem, IMS, des Internetprotokolls, IP, eine Sprache über eine paketvermittelte, PS, Sitzung, IMS-Sprache-über-PS-Sitzung, unterstützt, und das Verfahren Folgendes umfasst:
Bestimmen durch die MME auf der Grundlage empfangener Zellenüberlastungsinformationen, dass eine Zelle des Mobilfunknetzes überlastet ist, wobei das Bestimmen durch die MME auf der Grundlage empfangener Informationen, dass eine Zelle des Mobilfunknetzes überlastet ist, ein Senden einer Benachrichtigungsnachricht auslöst;
Bestimmen eines oder mehrerer Anwendergeräte im Netz gemäß Anwendergerätinformationen, wobei die Anwendergerätinformationen durch eine netzseitige Vorrichtung gesendet werden, und die Anwendergerätinformationen eine Priorität und/oder Standortinformationen und/oder eine kampierte Zelle und/oder einen aktuellen Dienstzustand und/oder eine Leistungsfähigkeit eines Anwendergeräts enthalten;
in einem Szenario eines unaufgeforderten leitungsvermittelten Rückfallauslagems, CSFB-Auslagern, führt die MME dann, wenn das eine oder die mehreren Anwendergeräte durch die MME bestimmt werden, eine unaufgeforderte CSFB-Auslagerungsprozedur aus, indem eine Benachrichtigungsnachricht zu dem einen oder den mehreren Anwendergeräten gesendet wird, um auszulösen, dass das eine oder die mehreren Anwendergeräte eine Registrierungsanforderungsnachricht oder eine kombinierte Registrierungsanforderungsnachricht zur MME senden, und dann, wenn die Registrierungsanforderungsnachricht oder die kombinierte Registrierungsanforderungsnachricht empfangen wird, eine Registrierungsannahmenachricht oder eine kombinierte Registrierungsannahmenachricht zu dem einen oder den mehreren Anwendergeräten gesendet wird, wobei die Registrierungsannahmenachricht oder die kombinierte Registrierungsannahmenachricht dem einen oder den mehreren Anwendergeräten anzeigt, dass die Sprache über das Multimediauntersystem, IMS, des Internetprotokolls, IP, VoIMS, nicht verfügbar ist, wobei
die Registrierungsanforderungsnachricht eine Anfügungsnachricht oder eine Verfolgungsbereichsaktualisierungsnachricht, TAU-Nachricht, ist;
die Registrierungsannahmenachricht eine Anfügungsannahmenachricht oder eine TAU-Annahmenachricht ist;
die kombinierte Registrierungsanforderungsnachricht eine kombinierte Anfügungsnachricht oder eine kombinierte TAU-Nachricht ist; und
die kombinierte Registrierungsannahmenachricht eine kombinierte Anfügungsannahmenachricht oder eine kombinierte TAU-Annahmenachricht ist und wobei
das Senden einer Benachrichtigungsnachricht zu dem einen oder den mehreren Anwendergeräten, um auszulösen, dass das eine oder die mehreren Anwendergeräte eine Registrierungsanforderungsnachricht oder eine kombinierte Registrierungsanforderungsnachricht zur MME senden, und dann, wenn die Registrierungsanforderungsnachricht oder die kombinierte Registrierungsanforderungsnachricht empfangen wird, das Senden einer Registrierungsannahmenachricht oder einer kombinierten Registrierungsannahmenachricht zu dem einen oder den mehreren Anwendergeräten Folgendes umfasst:
Senden der Benachrichtigungsnachricht zu dem einen oder den mehreren Anwendergeräten, wobei die Benachrichtigungsnachricht eine Trennnachricht der internationalen Mobilteilnehmeridentität, IMSI-Trennnachricht, ist, um auszulösen, dass das eine oder die mehreren Anwendergeräte die kombinierte Registrierungsanforderungsnachricht zur MME senden, wobei die kombinierte Registrierungsanforderungsnachricht die kombinierte TAU-Nachricht ist; und
Setzen dann, wenn die kombinierte TAU-Nachricht empfangen wird, einer durch eine IMS-Sprache-über-PS-Sitzung unterstützten Anzeige, IMS-Sprache-über-PSsitzungsunterstützte Anzeige, in der kombinierten Registrierungsannahmenachricht zu falsch, um anzuzeigen, dass VoIMS nicht verfügbar ist, und Senden der kombinierten Registrierungsannahmenachricht zu dem einen oder den mehreren Anwendergeräten, wobei die kombinierte Registrierungsannahmenachricht die kombinierte TAU-Annahmenachricht ist, oder wobei
das Senden einer Benachrichtigungsnachricht zu dem einen oder den mehreren Anwendergeräten, um auszulösen, dass das eine oder die mehreren Anwendergeräte eine Registrierungsanforderungsnachricht oder eine kombinierte Registrierungsanforderungsnachricht zur MME senden, und dann, wenn die Registrierungsanforderungsnachricht oder die kombinierte Registrierungsanforderungsnachricht empfangen wird, ein Senden einer Registrierungsannahmenachricht oder einer kombinierten Registrierungsannahmenachricht zu dem einen oder den mehreren Anwendergeräten Folgendes umfasst:
Senden der Benachrichtigungsnachricht zu dem einen oder den mehreren Anwendergeräten, wobei die Benachrichtigungsnachricht eine Neuzuordnungsnachricht einer global eindeutigen temporären Identität, GUTI-Neuzuordnungsnachricht, die eine ungültige TAI-Liste führt, ist, um auszulösen, dass das eine oder die mehreren Anwendergeräte die Registrierungsanforderungsnachricht zur MME senden, wobei die Registrierungsanforderungsnachricht die TAU-Nachricht ist; und
Setzen dann, wenn die TAU-Nachricht empfangen wird, einer durch eine IMS-Sprache-über-PS-Sitzung unterstützten Anzeige, IMS-Sprache-über-PSsitzungsunterstützte Anzeige, in der Registrierungsannahmenachricht zu falsch, um anzuzeigen, dass VoIMS nicht verfügbar ist, und Senden der Registrierungsannahmenachricht zu dem einen oder den mehreren Anwendergeräten, wobei die Registrierungsannahmenachricht die TAU-Annahmenachricht ist, oder wobei
das Senden einer Benachrichtigungsnachricht zu dem einen oder den mehreren Anwendergeräten, um auszulösen, dass das eine oder die mehreren Anwendergeräte eine Registrierungsanforderungsnachricht oder eine kombinierte Registrierungsanforderungsnachricht zur MME senden, und dann, wenn die Registrierungsanforderungsnachricht oder die kombinierte Registrierungsanforderungsnachricht empfangen wird, das Senden einer Registrierungsannahmenachricht oder einer kombinierten Registrierungsannahmenachricht zu dem einen oder den mehreren Anwendergeräten Folgendes umfasst:
Senden der Benachrichtigungsnachricht zu dem einen oder den mehreren Anwendergeräten, wobei die Benachrichtigungsnachricht eine Trennungsnachricht eines entwickelten Paketsystems, EPS-Trennungsnachricht, ist, um auszulösen, dass das eine oder die mehreren Anwendergeräte die Registrierungsanforderungsnachricht zur MME senden, wobei die Registrierungsanforderungsnachricht die Anfügungsnachricht ist; und
Setzen dann, wenn die Anfügungsnachricht empfangen wird, einer durch eine IMS-Sprache-über-PS-Sitzung unterstützten Anzeige, IMS-Sprache-über-PSsitzungsunterstützte Anzeige, in der Registrierungsannahmenachricht zu falsch, um anzuzeigen, dass VoIMS nicht verfügbar ist, und Senden der Registrierungsannahmenachricht zu dem einen oder den mehreren Anwendergeräten, wobei die Registrierungsannahmenachricht die Anfügungsregistrierungsannahmenachricht ist.

2. Verfahren nach Anspruch 1, wobei das Bestimmen eines oder mehrerer Anwendergeräte Folgendes umfasst:
Bestimmen des einen oder der mehreren Anwendergeräte gemäß Anwendergerätinformationen, die durch eine netzseitige Vorrichtung gesendet wurden, wobei die Anwendergerätinformationen Folgendes umfassen:
Standortinformationen eines Anwendergeräts, das durch die netzseitige Vorrichtung bedient wird, und/oder Zustandsinformationen des Anwendergeräts, das durch die netzseitige Vorrichtung bedient wird, und/oder Dienstinformationen des Anwendergeräts, das durch die netzseitige Vorrichtung bedient wird.

3. Verfahren nach Anspruch 1, wobei das Bestimmen durch die MME auf der Grundlage der empfangenen Informationen, dass eine Zelle des Mobilfunknetzes überlastet ist, Folgendes umfasst:
Bestimmen auf der Grundlage empfangener Informationen, dass eine Zelle des Mobilfunknetzes überlastet ist, wobei die Zellenüberlastungsinformationen einen Zellenüberlastungspegel und Zelleninformationen umfassen.

4. Mobilitätsmanagementeinheit, MME, wobei die MME eine MME eines Mobilfunknetzes ist, die im Multimediauntersystem, IMS, des Internetprotokolls, IP, eine Sprache über eine paketvermittelte, PS, Sitzung, IMS-Sprache-über-PS-Sitzung, unterstützt, und die MME konfiguriert ist, die Verfahrensschritte nach einem der Ansprüche 1 bis 3 auszuführen.

## Revendications

1. Procédé de contrôle de service, le procédé étant exécuté par une entité de gestion de la mobilité MME, la MME étant une MME d'un réseau mobile supportant la voix sur sous-système multimédia de protocole Internet IP, IMS, sur session à commutation de paquets, PS, voix IMS sur session PS, et le procédé comprenant les étapes suivantes :
déterminer, par la MME, sur la base d'informations d'encombrement de cellule reçues, qu'une cellule du réseau mobile est encombrée, où la détermination, par la MME, sur la base des informations reçues, qu'une cellule du réseau mobile est encombrée déclenche l'envoi d'un message de notification ;
déterminer un ou plusieurs équipements d'utilisateur dans le réseau en fonction d'informations sur l'équipement d'utilisateur, où les informations sur l'équipement d'utilisateur sont envoyées par un dispositif côté réseau, et les informations sur l'équipement d'utilisateur comprennent des informations de priorité et/ou de localisation et/ou de cellule occupée et/ou d'état de service courant et/ou de capacité d'un équipement d'utilisateur ;
dans un scénario de déchargement par repli par commutation de circuits, CSFB, non sollicité, lorsque les un ou plusieurs équipements d'utilisateur sont déterminés par la MME, la MME exécutant une procédure de déchargement CSFB non sollicité en envoyant un message de notification aux un ou plusieurs équipements d'utilisateur, de manière à déclencher l'envoi par les un ou plusieurs équipements d'utilisateur d'un message de demande d'enregistrement ou d'un message de demande d'enregistrement combiné à la MME, et lorsque le message de demande d'enregistrement ou le message de demande d'enregistrement combiné est reçu, en envoyant un message d'acceptation d'enregistrement ou un message d'acceptation d'enregistrement combiné aux un ou plusieurs équipements d'utilisateur, où le message d'acceptation d'enregistrement ou le message d'acceptation d'enregistrement combiné indique aux un ou plusieurs équipements d'utilisateur que le service de voix sur sous-système multimédia de protocole Internet IP, IMS VoIMS, est indisponible, où
le message de demande d'enregistrement est un message d'attachement ou un message de mise à jour de zone de suivi, TAU ;
le message d'acceptation d'enregistrement est un message d'acceptation d'attachement ou un message d'acceptation de TAU ;
le message de demande d'enregistrement combiné est un message d'attachement combiné ou un message de TAU combiné ; et
le message d'acceptation d'enregistrement combiné est un message d'acceptation d'attachement combiné ou un message d'acceptation de TAU combiné, et
où l'envoi d'un message de notification aux un ou plusieurs équipements d'utilisateur, de manière à déclencher l'envoi d'un message de demande d'enregistrement ou d'un message de demande d'enregistrement combiné à la MME par les un ou plusieurs équipements d'utilisateur, et lorsque le message de demande d'enregistrement ou le message de demande d'enregistrement combiné est reçu, l'envoi d'un message d'acceptation d'enregistrement ou d'un message d'acceptation d'enregistrement combiné aux un ou plusieurs équipements d'utilisateur comprennent les étapes suivantes :
envoyer le message de notification aux un ou plusieurs équipements d'utilisateur, où le message de notification est un message de détachement d'identité d'abonné mobile international, IMSI, de manière à déclencher l'envoi par les un ou plusieurs équipements d'utilisateur du message de demande d'enregistrement combiné à la MME, où le message de demande d'enregistrement combiné est le message TAU combiné ; et
lorsque le message TAU combiné est reçu, définir une indication de prise en charge de service de voix IMS sur session PS dans le message d'acceptation d'enregistrement combiné à une valeur « False », pour indiquer que le service VoIMS est indisponible, et envoyer le message d'acceptation d'enregistrement combiné aux un ou plusieurs équipements d'utilisateur, où le message d'acceptation d'enregistrement combiné est le message d'acceptation TAU combiné, ou
où
l'envoi d'un message de notification aux un ou plusieurs équipements d'utilisateur, de manière à déclencher l'envoi par les un ou plusieurs équipements d'utilisateur d'un message de demande d'enregistrement ou d'un message de demande d'enregistrement combiné à la MME, et lorsque le message de demande d'enregistrement ou le message de demande d'enregistrement combiné est reçu, l'envoi d'un message d'acceptation d'enregistrement ou d'un message d'acceptation d'enregistrement combiné aux un ou plusieurs équipements d'utilisateur comprennent les étapes suivantes :
envoyer le message de notification aux un ou plusieurs équipements d'utilisateur, où le message de notification est un message de réallocation d'identité temporaire unique au niveau mondial, GUTI, acheminant une liste TAI non valide, de manière à déclencher l'envoi par les un ou plusieurs équipements d'utilisateur du message de demande d'enregistrement à la MME, où le message de demande d'enregistrement est le message TAU ; et
lorsque le message TAU est reçu, définir une indication de prise en charge de service de voix IMS sur session PS dans le message d'acceptation d'enregistrement à une valeur « False », pour indiquer que le service VoIMS est indisponible, et envoyer le message d'acceptation d'enregistrement aux un ou plusieurs équipements d'utilisateur, où le message d'acceptation d'enregistrement est le message d'acceptation TAU, ou
où
l'envoi d'un message de notification aux un ou plusieurs équipements d'utilisateur, de manière à déclencher l'envoi par les un ou plusieurs équipements d'utilisateur d'un message de demande d'enregistrement ou d'un message de demande d'enregistrement combiné à la MME, et lorsque le message de demande d'enregistrement ou le message de demande d'enregistrement combiné est reçu, l'envoi d'un message d'acceptation d'enregistrement ou d'un message d'acceptation d'enregistrement combiné aux un ou plusieurs équipements d'utilisateur comprennent les étapes suivantes :
envoyer le message de notification aux un ou plusieurs équipements d'utilisateur, où le message de notification est un message de détachement de système de paquets évolué, EPS, de manière à déclencher l'envoi par les un ou plusieurs équipements d'utilisateur du message de demande d'enregistrement à la MME, où le message de demande d'enregistrement est le message d'attachement ; et
lorsque le message d'attachement est reçu, définir une indication de prise en charge de service de voix IMS sur session PS dans le message d'acceptation d'enregistrement à une valeur « False », pour indiquer que le service VoIMS est indisponible, et envoyer le message d'acceptation d'enregistrement aux un ou plusieurs équipements d'utilisateur, où le message d'acceptation d'enregistrement est le message d'acceptation d'enregistrement d'attachement.

2. Procédé selon la revendication 1, dans lequel la détermination d'un ou plusieurs équipements d'utilisateur comprend l'étape suivante :
déterminer les un ou plusieurs équipements d'utilisateur en fonction d'informations d'équipement d'utilisateur envoyées par un dispositif côté réseau, où les informations d'équipement d'utilisateur comprennent une ou plusieurs des informations suivantes :
des informations de localisation d'un équipement d'utilisateur desservi par le dispositif côté réseau, des informations d'état de l'équipement d'utilisateur desservi par le dispositif côté réseau, et des informations de service de l'équipement d'utilisateur desservi par le dispositif côté réseau.

3. Procédé selon la revendication 1, dans lequel la détermination, par la MME sur la base des informations reçues, qu'une cellule du réseau mobile est encombrée comprend l'étape suivante :
déterminer, sur la base des informations reçues, qu'une cellule du réseau mobile est encombrée, où les informations d'encombrement de la cellule comprennent un niveau d'encombrement de la cellule et des informations de cellule.

4. Entité de gestion de la mobilité MME, où la MME est une MME d'un réseau mobile supportant la voix sur sous-système multimédia de protocole Internet IP, IMS, sur session à commutation de paquets, PS, voix IMS sur session PS, et la MME est configurée pour exécuter les étapes de procédé selon l'une quelconque des revendications 1 à 3.
